# EUROPEAN PATENT SPECIFICATION

(11) **EP 1 541 391 B1**
(45) Date of publication and mention of the grant of the patent: **24.03.2010**
(21) Application number: 04106412.2
(22) Date of filing: 09.12.2004
(51) Int. Cl.: B60G 17/02, B60G 11/04, F16F 1/20, F16F 3/02

(54) **Two-stage variable-rate mechanical leaf spring suspension, and a method for adjusting the point at which the second spring rate is generated**
Aufhängung mit einer zwischen zwei Steifigkeiten veränderlichen Blattfeder und Verfahren zur Einstellung des Arbeitspunktes für die zweite Steifigkeit
Suspension avec un ressort mécanique à lame de rigidité variable prenant deux valeurs et procédé de réglage du point de génération de la deuxième valeur de rigidité du ressort

(30) Priority: 10.12.2003 IT MI20032411
(43) Date of publication of application: 15.06.2005
(73) Proprietor: IVECO S.p.A., 10156 Torino (IT)
(72) Inventor: Stecco, Maurizio, 10032 Brandizzo (IT); Contini, Umberto, 10155 Torino (IT)
(74) Representative: Gervasi, Gemma

(56) References cited:
- WO-A-97/36118
- GB-A- 2 185 088
- US-A- 915 227
- US-A- 1 534 533
- US-A- 4 175 772
- US-A- 4 433 833
- US-A1- 2003 111 813
- PATENT ABSTRACTS OF JAPAN vol. 0102, no. 53 (M-512), 29 August 1986 (1986-08-29) & JP 61 081812 A (HORIKIRI BANE SEISAKUSHO:KK), 25 April 1986 (1986-04-25)
- PATENT ABSTRACTS OF JAPAN vol. 0081, no. 66 (M-314), 2 August 1984 (1984-08-02) & JP 59 063209 A (HINO JIDOSHA KOGYO KK), 10 April 1984 (1984-04-10)
- PATENT ABSTRACTS OF JAPAN vol. 0060, no. 23 (M-111), 10 February 1982 (1982-02-10) & JP 56 141433 A (NHK SPRING CO LTD), 5 November 1981 (1981-11-05)
- PATENT ABSTRACTS OF JAPAN vol. 1998, no. 12, 31 October 1998 (1998-10-31) & JP 10 193943 A (HINO MOTORS LTD), 28 July 1998 (1998-07-28)
- PATENT ABSTRACTS OF JAPAN vol. 0070, no. 50 (M-197), 26 February 1983 (1983-02-26) & JP 57 198110 A (NIHON HATSUJIYOU KK), 4 December 1982 (1982-12-04)

## Description

This invention relates to a two-stage variable-rate mechanical leaf spring suspension, and a method for adjusting the point at which the second spring rate is generated.

Conventional two-stage leaf springs consist of a main leaf, with a given spring rate, that is hinged at the two ends to the vehicle frame, and a counter leaf that is attached to the main leaf at the mid-point and is free at the ends, which are fitted with pads. When the main leaf bends in excess of a given value, which corresponds to a specific increase in the load and pressure applied to the leaf spring, the pads at the ends of the counter leaf come into contact with the main leaf, thus increasing the overall stiffness of the leaf spring and generating a second spring rate.

Examples of conventional two stage leaf spring are shown in patents US 4433833 and US 1534533 and in patent applications WO 97/36118 and JP 56141433.

In particular US 4433833 discloses a gradually variable rate mechanical leaf spring suspension. In this solution two clamping means are provided to clamp the main leaf and the counter leaf in the direction of their thickness and to permit a sliding movement of the main leaf relative to the counter leaf. This solution also comprises a press member for pressing the main leaf against the counter leaf in order to vary the spring rate.

US 1534533 discloses spring suspension for vehicles comprising a top leaf substantially straight and a lower leaf curved. These leafs are mutually connected in correspondence of a point adapted to be anchored to the chassis of the vehicle and are connected, at their outer ends, by a shackle. In operation the lower leaf on being flexed contacts progressively, along its upper surface, with the top leaf in proportion to the magnitude of the load and according to a fixed spring rate.

W0 97/36118 discloses a mechanical leaf spring suspension comprising two curved leafs rigidly joined together at one end of their ends in such a way that the surfaces of both touch each other at that end. The leafs length between the touching point and the points where the compression force are to be applied is identical for the two leafs. Also the curvature of each of the leafs has the same sign along the entire working length.

JP 56141433 discloses a mechanical leaf spring suspension comprising a main leaf spring with tapered portions whose thickness decreases gradually toward its tips. An auxiliary leaf is connected to the main one and comprises a tapered portion whose thickness decreases towards its tips and an arc portion protruded toward the tension side. The length of the auxiliary leaf spring is made almost equal to that of the main leaf spring. The arc-shaped portion come into and out contact with the main leaf when the load is higher than a predetermined value.

According to the conventional solutions above described, the point at which the second spring rate is generated is predetermined by the geometry of the leaf spring and the counter leaf, and is therefore a fixed value. This means that the system is not versatile enough to suit the requirements of different vehicle loads and usages.

The purpose of this invention is to overcome the drawback described above with a two-stage variable-rate mechanical leaf spring suspension, and a method for adjusting the point at which the second spring rate is generated according to the specific vehicle load and usage.

The subject of the present invention is a two-stage variable-rate mechanical leaf spring suspension, comprising a main leaf equipped with the means for securing it to a vehicle, and a counter leaf that is attached to the main leaf at the leaf mid-point and is free at the ends. The two-stage variable-rate mechanical leaf spring suspension also comprises a sliding mechanism that causes the counter leaf to move towards the main leaf. The two-stage variable-rate mechanical leaf spring suspension is **characterized in that** the sliding mechanism comprises sliding collars fitted around the main and the counter leaf and an actuator hinged at said leaf mid-point. The actuator is connected to the sliding collars and causes the sliding collars to slide along the main leaf and the counter leaf and thus move the counter leaf closer to the main leaf. As it moves away from the actuator, the sliding collar causes the counter leaf to move towards the leaf, thus generating the second spring rate in advance.

The point at which the second spring rate is generated can be adjusted continuously as a function of the sliding of the collar.

It is a particular subject of the invention a two-stage variable-rate mechanical leaf spring suspension, and a method for adjusting the point at which the second spring rate is generated, as described more fully in the claims, which are an integral part of this description.

The purposes and advantages of this invention will become clear from the following detailed description of a preferred embodiment (and the relative alternative forms of embodiment) and the drawings that are attached hereto, which are merely illustrative and not limitative, in which:
figure 1 is a diagram of a two-stage variable-rate leaf spring according to this invention;
figure 2 shows the load-deflection curve of the leaf spring according to this invention.

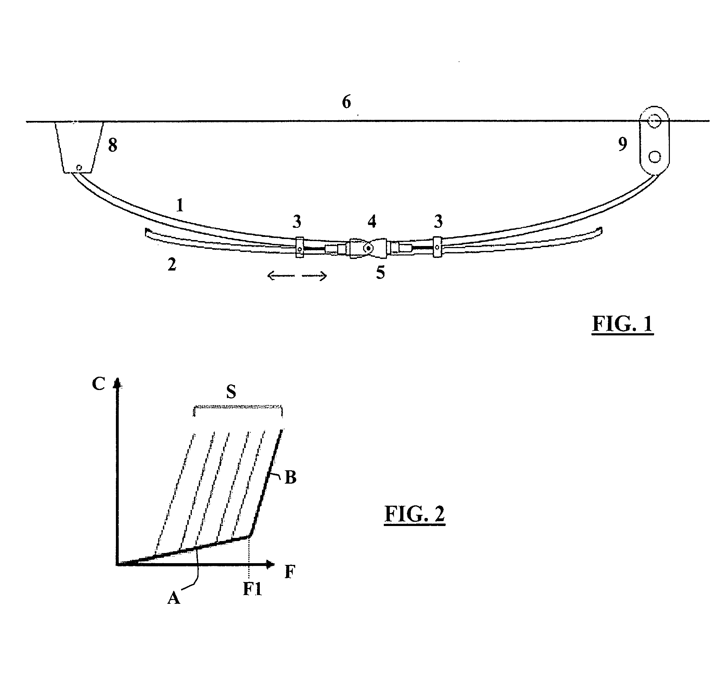

In fig.1 reference 1 indicates a main leaf spring, hinged at each end to the frame 6 of the vehicle by means of a fixed pin 8 and a conventional trunnion mounting 9, used to compensate for the changes in the length of the leaf spring due to bending.

Reference 2 indicates a counter leaf that is attached to the main leaf at the leaf mid-point and is free at the ends, which are equipped with pads.

Reference 3 indicates two sliding collars, for example of the closed ring type, that are fitted around the main leaf 1 and the counter leaf 2. The collars are fitted with a hinge to which an actuator 5 is connected, and said actuator is also hinged at the leaf mid-point 4.

The actuator 5 causes the collars 3 to slide along the leaf and the counter leaf of the leaf spring. As the sliding collars 3 move away from the leaf mid-point 4, they cause the counter leaf 2 to move closer to the leaf 1, thus generating the second spring rate in advance, in that the pads on the counter leaf 2 are brought into contact with the main leaf 1 under loads (press ures) that are lower than those required to create contact in systems that do not incorporate the device according to this invention.

The actuator 5 is hinged at the leaf mid-point so that it can follow the movements of the suspension.

The actuator 5 may consist of two hydraulic jacks, one for each branch, hinged at the point 4, operated by means of a conventional pressurized oil circuit. Alternatively, it may consist of a rotating-translating worm with threaded stem of a type that is known in the prior art, hinged at the point 4.

The point at which the second spring rate is generated can be adjusted continuously as a function of the sliding of the collar, in order to adjust the horizontal "trim" and height of the vehicle.

The adjustment can be performed manually or automatically, according to the desired inclination of the vehicle.

The adjustment can be effected by means of a conventional inclinometer (e.g. with variable resistance), or using an electronic brake force distribution system of the type currently used on vehicles that sends a position signal for the collar when it detects a deviation from the horizontal position.

The inclination can be adjusted to determine the height of the vehicle, for example to align the vehicle's loading-unloading platform with an external platform.

Figure 2 shows the load C / deflection F curve of the suspension as a function of the displacement S of the sliding collar. The condition in which there is no displacement, namely when there is no collar, as in the case of the conventional system, is shown by the thick broken line that comprises a first line A representing the spring rate of the main leaf up to a deflection value F1 at which the pads on the counter leaf touch the main leaf: for greater loads the line B is obtained from the sum of the contributions by both leaves.

With the introduction of the method of adjustment according to this invention, as a function of the displacement S of the collars 3, the line B moves in a parallel direction towards positions that are closer to the origin, while the direction of the line A remains unchanged, so that the position of the collar determines the choice of the line B and the generation of the second spring rate earlier at lower values of F1.

It will be apparent to the person skilled in the art that other alternative and equivalent embodiments of the invention can be conceived and reduced to practice without departing from the true spirit of the invention.

In particular the actuator (5) may be installed on one side or on both sides of the leaf spring.

Alternatively the sliding collars 3 may be of the open "fork" or "rake" type that are inserted between the leaf 1 and the counter leaf 2, in order to facilitate assembly/disassembly procedures.

The present invention achieves a number of advantages over the prior art.

Such advantages consist of the fact that the load-deflection curve of the suspension can be optimized according to the specific requirements, instead of using a compromise curve.

Furthermore, the number of alternative two-stage leaf springs can be reduced and a single type of leaf spring can be used for different applications.

Adjustments can be performed on a vehicle according to the specific load conditions.

From the description set forth above it will be possible for the person skilled in the art to embody the invention without introducing any further construction details.

## Claims

1. Two-stage variable-rate mechanical leaf spring suspension, comprising:
- a main leaf (1) with means for securing the leaf spring to a vehicle;
- a counter leaf (2) attached to the main leaf at the leaf mid-point (4) and free at the ends;
- a sliding mechanism (3, 5) that causes the counter leaf (2) to move closer to the main leaf (1),
**characterized in that** said sliding mechanism comprises:
- sliding collars (3), that are fitted around said main leaf (1) and said counter leaf (2);
- an actuator (5) hinged at said leaf mid-point (4), connected to said sliding collars (3), that causes said sliding collars to slide along the main leaf and the counter leaf of the leaf spring and thus move the counter leaf closer to the main leaf.

2. Mechanical suspension according to claim 1, **characterized in that** said actuator (5) comprises hydraulic jacks, hinged at said leaf mid-point (4), and connected to said sliding collars (3).

3. Mechanical suspension according to claim 1, **characterized in that** said actuator (5) comprises rotating-translating screws, hinged at said leaf mid-point (4), and connected to said sliding collars (3).

4. Mechanical suspension according to claim 1, **characterized in that** said sliding collars (3) are of the closed ring type, or alternatively of the open "fork" or "rake" type and inserted between said main leaf (1) and said counter leaf (2).

5. Method for adjusting the point at which the second spring rate is generated, in a two-stage mechanical leaf spring suspension according to any of the previous claims, in which said mechanical suspension comprises a first spring rate when the ends of said counter leaf (2) do not touch said main leaf (1), or else a second spring rate, **characterized in that** it controls said sliding mechanism (3, 5) in order to bring the counter leaf (2) closer to the main leaf (1), and thus generate the second spring rate in advance.

6. Method according to claim 5, **characterized in that** said adjustments may be effected by means of an inclinometer, or an electronic brake force distribution system that, when it detects any deviation from the horizontal trim of the vehicle, sends a position signal for said sliding mechanism.

## Patentansprüche

1. Zweistufig-variable, mechanische Blattfederaufhängung, umfassend:
ein Hauptblatt (1) mit einem Mittel zum Sichern der Blattfeder an einem Fahrzeug,
ein Gegenblatt (2), das an der Blattmitte (4) am Hauptblatt angebracht und an den Enden frei ist,
einen Gleitmechanismus (3, 5), der das Gegenblatt (2) näher an das Hauptblatt (1) bewegen lässt,
**dadurch gekennzeichnet, dass** der Gleitmechanismus umfasst:
Gleitmanschetten (3), die um das Hauptblatt (1) und das Gegenblatt (2) installiert sind,
einen schwenkbar an der Blattmitte (4) angebrachten Betätiger (5), der mit den Gleitmanschetten (3) verbunden ist, der die Gleitmanschetten entlang dem Hauptblatt und dem Gegenblatt der Blattfeder gleiten lässt, und so das Gegenblatt näher zum Hauptblatt bewegt.

2. Mechanische Aufhängung gemäß Anspruch 1, **dadurch gekennzeichnet, dass** der Betätiger (5) mechanische Heber umfasst, die schwenkbar an der Blattmitte (4) angebracht und mit den Gleitmanschetten (3) verbunden sind.

3. Mechanische Aufhängung gemäß Anspruch 1, **dadurch gekennzeichnet, dass** der Betätiger (5) Drehübersetzungsschrauben umfasst, die an der Blattmitte (4) schwenkbar angebracht und mit den Gleitmanschetten (3) verbunden sind.

4. Mechanische Aufhängung gemäß Anspruch 1, **dadurch gekennzeichnet, dass** die Gleitmanschetten (3) als geschlossener Ring vorliegen, oder alternativ als "Gabel" oder "Rechen" vorliegen, und zwischen das Hauptblatt (1) und das Gegenblatt (2) eingefügt sind.

5. Verfahren zum Einstellen des Punktes, an dem die zweite Federkonstante erzeugt wird, und zwar in einer zweistufig-variablen, mechanischen Blattfederaufhängung gemäß einem der vorangegangenen Ansprüche, wobei die mechanische Aufhängung eine erste Federkonstante umfasst, wenn die Enden des Gegenblatts (2) das Hauptblatt (1) nicht berühren, oder sonst eine zweite Federkonstante, **dadurch gekennzeichnet, dass** es den Gleitmechanismus (3, 5) steuert, um das Gegenblatt (2) näher zum Hauptblatt (1) zu bringen, und somit die zweite Federkonstante vorab zu erzeugen.

6. Verfahren gemäß Anspruch 5, **dadurch gekennzeichnet, dass** die Einstellungen mittels eines Neigungsmessers oder eines elektrischen Bremskraftverteilungssystems bewirkt werden können, der/das, wenn er/es eine Abweichung von einer horizontalen Lage des Fahrzeugs erfasst, ein Positionssignal für den Gleitmechanismus aussendet.

## Revendications

1. Suspension à ressort à lames mécanique à flexibilité variable et deux phases, comprenant :
une lame principale (1) avec des moyens pour fixer le ressort à lames sur un véhicule ;
une contre-lame (2) fixée sur la lame principale au niveau du point central de la lame (4) et libre au niveau des extrémités ;
un mécanisme coulissant (3, 5) qui amène la contre-lame (2) à se déplacer plus à proximité de la lame principale (1),
**caractérisée en ce que** ledit mécanisme coulissant comprend :
des colliers coulissants (3) qui sont montés autour de ladite lame principale (1) et de ladite contre-lame (2) ;
un actionneur (5) articulé au niveau dudit point central de lame (4), raccordé auxdits colliers coulissants (4), qui amène lesdits colliers coulissants à coulisser le long de la lame principale et de la contre-lame du ressort à lames et ainsi à déplacer la contre-lame plus à proximité de la lame principale.

2. Suspension mécanique selon la revendication 1, **caractérisée en ce que** ledit actionneur (5) comprend des vérins hydrauliques, articulés au niveau dudit point central de lame (4), et raccordés auxdits colliers coulissants (3).

3. Suspension mécanique selon la revendication 1, **caractérisée en ce que** ledit actionneur (5) comprend des vis de rotation-translation, articulées au niveau dudit point central de lame (4) et raccordées auxdits colliers coulissants (3).

4. Suspension mécanique selon la revendication 3, **caractérisée en ce que** lesdits colliers coulissants (3) sont du type à anneau fermé, ou en variante du type à « fourche » ou « râteau » ouverts et insérés dans ladite lame principale (1) et ladite contre-lame (2).

5. Procédé pour ajuster le point auquel la seconde flexibilité de ressort est générée, dans une suspension à ressort à lames mécanique à deux phases selon l'une quelconque des revendications précédentes, dans lequel ladite suspension mécanique comprend une première flexibilité de ressort lorsque les extrémités de ladite contre-lame (2) ne sont pas en contact avec ladite lame principale (1), ou bien une seconde flexibilité de ressort, **caractérisé en ce qu'**elle commande ledit mécanisme coulissant (3, 5) afin d'amener la contre-lame (2) plus à proximité de la lame principale (1), et générer ainsi la seconde flexibilité de ressort à l'avance.

6. Procédé selon la revendication 5, **caractérisé en ce que** lesdits ajustements peuvent être effectués au moyen d'un inclinomètre ou d'un système de distribution de force de freinage électronique qui, lorsqu'il détecte toute déviation de la jante horizontale du véhicule, envoie un signal de position pour ledit mécanisme coulissant.
